Europäisches Patentamt

European Patent Office

Office européen des brevets

(19)

(11) Veröffentlichungsnummer: **0 346 572**
**A2**

(12) **EUROPÄISCHE PATENTANMELDUNG**

(21) Anmeldenummer: **89104406.7**

(51) Int. Cl.⁴: **H04L 11/16**

(22) Anmeldetag: **13.03.89**

(30) Priorität: **16.06.88 DE 3820561**

(43) Veröffentlichungstag der Anmeldung:
**20.12.89 Patentblatt 89/51**

(84) Benannte Vertragsstaaten:
**BE DE FR GB NL SE**

(71) Anmelder: **Siemens Aktiengesellschaft**
**Wittelsbacherplatz 2**
**D-8000 München 2(DE)**

(72) Erfinder: **Muhr, Andreas**
**Starenweg 1**
**D-7515 Linkenheim(DE)**
Erfinder: **Thamm, Peter, Dr.-Ing.**
**Posseltstrasse 17 a**
**D-7500 Karlsruhe 41(DE)**

(54) **Schaltungsanordnung zum Übertragen von binären Signalen.**

(57) Die an eine Busleitung (BL1, BL2) angeschlossenen Empfänger (E1, En) enthalten je eine Klemmschaltung, mit der die Eingangsspannung auf den
Signalpegel geklemmt wird, der bei einem der beiden Zustände von binären Signalen auf der Busleitung (BL1, BL2) auftritt. Ein Vergleicher (T3) gibt ein
den zweiten Zustand der binären Signale anzeigendes Signal ab, wenn die Differenz zwischen dem
Klemmpotential und dem auf der Busleitung auftretenden Signalpegel einen vorgegebenen Wert übersteigt. Mit dem Ausgangssignal des Vergleichers
(T3) wird ein mit hochfrequenten Taktimpulsen gespeister Übertrager (U2) gesteuert.

Die Erfindung wird in Bussystemen angewendet,
deren Empfänger von der Busleitung mittels eines
Übertragers galvanisch getrennt sind.

FIG 1

## Schaltungsanordnung zum Übertragen von binären Signalen

Die Erfindung betrifft eine Schaltungsanordnung zum Übertragen von binären Signalen gemäß dem Oberbegriff des Anspruchs 1.

In der DE-OS 30 15 661 ist eine Schaltungsanordnung zum Übertragen von binären Signalen über eine Busleitung beschrieben, die über Widerstände, die gleich dem Wellenwiderstand sind, an eine erste Spannungsquelle angeschlossen ist. Zum Senden von binären Signalen schalten die an die Busleitung angeschlossenen Stationen die Busleitung an eine zweite Spannungsquelle. Die Empfänger bestehen im wesentlichen aus einem Vergleicher, der galvanisch an die Busleitung angeschlossen ist und der die Spannung auf der Busleitung mit einer Referenzspannung vergleicht. Vor allem bei prozeßtechnischen Anwendungen ist es häufig nicht möglich, an beide Enden der Busleitung eine Speisespannungsquelle anzuschließen, und die Empfänger und Sender müssen galvanisch von der Busleitung getrennt sein. Es tritt dann das Problem auf, daß an den Empfängern Signalpegel auftreten, die je nach Anschlußort von Sender und Empfänger unterschiedlich sind. Wenn z. B. eine Busleitung mit einem ohmschen Widerstand von 80 Ohm und einem Wellenwiderstand von 120 Ohm an einem Ende mit einer Spannung von 12 Volt über einen Widerstand von 120 Ohm gespeist wird und am anderen Ende mit dem Wellenwiderstand abgeschlossen ist, so ändert sich an einem in der Nähe der Speisespannungsquelle liegenden Empfänger die Spannung von 7,5 Volt auf 4,8 Volt, wenn ein am andern Ende der Leitung liegender Sender sendet. Dagegen sinkt die Spannung an diesem Ende von 4,5 Volt auf 0 Volt, wenn ein näher an der Speisespannungsquelle liegender Sender arbeitet. Dieser Effekt ist vor allem dann störend, wenn die Empfänger von der Busleitung mittels eines Übertragers galvanisch getrennt sind, da diese nicht ohne weiteres binäre Signale einwandfrei übertragen. Ist nämlich ein Datensignal nicht gleichstromfrei, kann der Übertrager in Sättigung gehen, wodurch ein Teil der Information nicht mehr übertragen wird.

Die DE-AS 20 50 994 beschreibt daher ein Verfahren, bei dem ein Übertrager über eine erste Wicklung mit einem periodischen Signal gespeist wird. Zu einer zweiten Wicklung ist ein elektronischer Schalter parallelgeschaltet, der von den binären Signalen gesteuet wird. Bei einem der beiden Zustände des binären Signals, z. B. beim Signal log. "0", ist dieser Schalter geöffnet, so daß er nicht die zweite Wicklung bedämpft und das periodische Signal zu einer dritten Wicklung übertragen wird, an die ein Gleichrichter angeschlossen ist. Ist das binäre Signal dagegen log. "1", schließt der Schalter die zweite Wicklung kurz, so daß das periodische Signal nicht mehr zur dritten Wicklung übertragen wird und die Spannung am Ausgang des Gleichrichters Null wird. Das binäre Signal wird somit übertragen, wobei ein Signalzustand beliebig lange bestehen kann.

In der DE-OS 22 16 216 ist ein ähnliches Verfahren beschrieben, wobei dort für die Einspeisung der Taktimpulse und das Auskoppeln dieselbe Wicklung verwendet ist.

Der vorliegenden Erfindung liegt die Aufgabe zugrunde, eine Anordnung zum Übertragen von binären Signalen gemäß dem Oberbegriff des Anspruchs 1 zu schaffen, die eine induktive Ankopplung der Empfänger an die Busleitung auch dann gestattet, wenn die Signalpegel auf der Busleitung für gleiche Binärsignalzustände unterschiedlich sind.

Erfindungsgemäß wird diese Aufgabe mit den im kennzeichnenden Teil des Anspruchs 1 angegebenen Maßnahmen gelöst. Zweckmäßig wird auf die Spannung geklemmt, die dann auf der Busleitung liegt, wenn die Schalter aller Sender geöffnet sind. Diese Spannung ist zwar von Empfänger zu Empfänger unterschiedlich, bleibt aber für die einzelnen Empfänger konstant, so daß die Kondensatoren nicht umgeladen werden. Die erfindungsgemäß ausgestatteten Empfänger brauchen nicht entsprechend der Stelle, an der sie an die Busleitung gekoppelt sind, eingestellt zu werden. Mit der neuen Anordnung können beliebige binäre Signale, also auch solche mit einem Gleichstromanteil, übertragen werden.

Die Klemmschaltung enthält vorteilhaft eine Diode, die mit dem Kondensator eine zwischen den Adern der Busleitung liegende Reihenschaltung bildet. Der Vergleicher kann aus einem Transistor bestehen, dessen Steuerstrecke parallel zur Diode liegt, und zwar derart, daß, wenn die Diode in Durchlaßrichtung betrieben wird, der Transistor gesperrt ist, und daß, wenn an der Diode eine Sperrspannung liegt, der Transistor in den leitfähigen Zustand gesteuert ist.

Wegen möglicher Verzerrungen der Signale auf der Busleitung kann es zwecks einer genaueren Wiederherstellung der Signale vorteilhaft sein, die Flanken des wiederhergestellten Signals in Abhängigkeit der Richtung der Signaländerung bei unterschiedlichen Eingangssignalpegeln zu erzeugen. Hierzu dienen weitere Ausgestaltungen der Erfindung, die in den Ansprüchen 4 bis 6 angegeben sind.

Anhand der Zeichnung werden im folgenden die Erfindung sowie weitere Vorteile und Ausgestaltungen näher beschrieben und erläutert.

Es zeigen

Figur 1 das Schaltbild eines Ausführungsbeispiels der Erfindung mit einer einzigen Schaltschwelle,

Figur 2 das Schaltbild eines Ausführungsbeispiels mit zwei Schaltschwellen und

Figur 3 Impulsdiagramme zur Verdeutlichung der Funktion des Ausführungsbeispiels nach Figur 2.

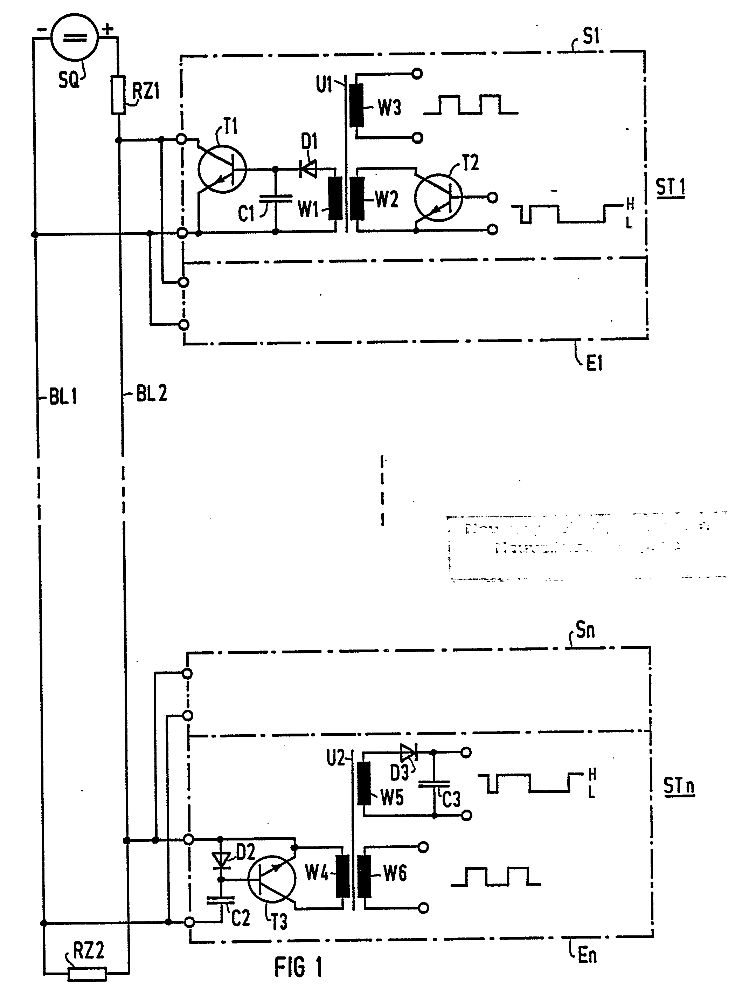

In Figur 1 sind mit BL1, BL2 zwei Adern einer Busleitung bezeichnet, an deren einen Ende eine Spannungsquelle SQ über einen Widerstand RZ1 angeschlossen ist, der gleich dem Wellenwiderstand der Busleitung ist. Am anderen Ende ist die Busleitung mit einem Widerstand RZ2, ebenfalls mit dem Wellenwiderstand, abgeschlossen. Es fließt daher stets ein Mindeststrom von z. B. 50 mA, der zur Überwachung auf Leitungsbruch herangezogen werden kann. Der Widerstand RZ1 dient nicht nur zur reflexions freien Übertragung, sondern auch zur Begrenzung des Stromes im Kurzschlußfalle. An die Busleitung sind mehrere Stationen ST1 ... STn parallel angeschlossen, die u. a. jeweils einen Sender S1, Sn und einen Empfänger E1, En enthalten. Die Station ST1 kann als zentrale Station in der Warte untergebracht sein.

Aufbau und Funktion der Sender, die unter sich gleich sind, wird am Beispiel des Senders S1 erläutert. Ein Übertrager U1 weist drei Wicklungen W1, W2, W3 auf. Der Wicklung W2 ist die Kollektor-Emitter-Strecke eines Transistors T2 parallelgeschaltet, dessen Basiselektrode das zu übertragende binäre Signal zugeführt ist. Die Wicklung W3 ist mit einem hochfrequenten, periodischen Taktsignal gespeist, das ein Sinussignal sein kann, und dessen Frequenz wesentlich größer als die der Taktfrequenz des binären Signals ist. Beim Signalpegel L des binären Signals ist der Transistor T2 gesperrt, die Wicklung W2 ist dann praktisch unbedämpft, und das Taktsignal wird zur Wicklung W1 übertragen und dort von einer Diode D1 gleichgerichtet. Die an einem Glättungskondensator C1 auftretende positive Spannung steuert einen Transistor T1 durch, so daß dessen Kollektor-EmitterStrecke die beiden Adern BL1, BL2 der Busleitung kurzschließt. Dadurch sinkt an allen Stationen die Spannung auf der Busleitung. Wird dem Transistor T2 ein binäres Signal mit dem Pegel H zugeführt, schließt er die Wicklung W2 kurz, und der Übertrager U1 ist so bedämpft, daß das Taktsignal nicht zur Wicklung W1 übertragen wird. Der Transistor T1 ist daher gesperrt und belastet nicht die Busleitung. Die von einem Sender abgegebenen binären Signale werden von den Empfängern aller Stationen empfangen, also auch von dem der Station, die den das binäre Signal abgebenden Sender enthält. Damit können die Stationen ihre eigenen Sender überprüfen.

Zur Erläuterung der auf der Busleitung auftretenden Signalpegel wird angenommen, daß die Spannungsquelle SQ eine Spannung von 12 Volt abgibt, daß die Werte der Widerstände RZ1, RZ2 und der Wellenwiderstand der Busleitung jeweils 120 Ohm betragen und die Adern BL1, BL2 jeweils einen ohmschen Widerstand von 40 Ohm haben. Die Station ST1 sei in unmittelbarer Nähe der Spannungsquelle SQ und des Widerstandes RZ1 an die Busleitung angeschlossen, die Station STn in unmittelbarer Nähe des Abschlußwiderstandes RZ2. Unter diesen Annahmen liegt an der Station ST1 eine Spannung von 7,5 Volt und an der Station STn eine Spannung von 4,5 Volt auf der Busleitung, wenn alle Sender das Binärsignal H abgeben. Sendet der Sender -S1 das Signal L, sinkt die Spannung auf der Busleitung auf 0 Volt, wenn der Einfachheit halber die Restspannung des Transistors T1 unberücksichtigt bleibt. Gibt dagegen der Sender Sn das Signal L ab, dann sinkt die Spannung am Empfänger E1 nur auf etwa 4,8 Volt, an der Station STn dagegen auf die Restspannung des Schalttransistors. Die Spannungen an den dazwischenliegenden Stationen liegen zwischen denen an den Stationen ST1 und STn. Es treten daher an den einzelnen Stationen völlig verschiedene Spannungen auf.

Das Problem der unterschiedlichen Spannungspegel ist in den Empfängern, die übereinstimmend aufgebaut sind, mittels einer Klemmschaltung gelöst. Anhand des Schaltbildes des Empfängers En wird die Funktion der Empfänger näher erläutert. Die Empfänger enthalten jeweils einen Übertrager U2 mit drei Wicklungen W4, W5, W6. Letzterem wird ein hochfrequentes Taktsignal zugeführt, das zweckmäßig derselben Quelle wie das Signal entnommen ist, mit dem die Wicklung W3 des Sender-Übertragers U1 gespeist ist. Liegt auf der Busleitung das Signal H, dann wird mit der bei diesem Pegel auftretenden Spannung über eine Diode D2 ein Kondensator C2 aufgeladen. Die Kondensatorspannung ist gleich der um die Durchlaßspannung der Diode D2 verminderten Spannung auf der Busleitung. Ein Transistor T3 ist dabei gesperrt. Das der Wicklung W6 zugeführte Taktsignal wird daher zur Wicklung W5 übertragen, an die ein Gleichrichter mit einer Diode D3 und einem Siebkondensator C3 angeschlossen ist, an dessen Ausgang eine dem Signal H entsprechender Pegel auftritt. Wird auf der Busleitung das Signal L eingestellt, dann sperrt die Diode D2, und der Transistor T3 wird durchgesteuert, so daß die Taktimpulse nicht mehr von der Wicklung W6 zur Wicklung W5 übertragen werden. Die Ausgangsspannung der Diode D3 wird Null, entspre chend dem Signal L, d. h. die Signale H und L werden vom Eingang des jeweils angesteuerten Sender-Transistors T2 zu den Ausgängen aller Empfängerdioden D3 übertragen. Im Ausführungsbeispiel ist die Mindestspannungsdifferenz zwischen den Pegeln von H- und L-Signal gleich der Summe aus Durchlaßspannung der Diode D2 und der Einschaltsteuerspannung des Transistors T3. Durch Reihenschaltung von mehreren Dioden D2 oder Einschalten einer oder mehrerer Dioden in den Emitterkreis des Transistors T3 kann der erforderliche minimale Spannungshub auf der Busleitung vergrößert werden. Man wird die Ansprechschwelle zweckmäßig auf etwa die Hälfte des kleinsten auf der Busleitung auftretenden Spannungshubs einstellen. Im Ausführungsbeispiel tritt an der Station ST1 der kleinste Spannungshub von 2,8 Volt auf. Die Ansprechschwelle stellt man daher auf 1 bis 1,5 Volt ein, die mit der dargestellten Empfängerschaltung in etwa erreicht wird. Der Transistor T3 stellt in Verbindung mit der Diode D2 einen Vergleicher dar, der die Kondensatorspannung C2 mit der jeweiligen Spannung auf der Busleitung vergleicht und ein Signal abgibt bzw. die Wicklung W4 bedämpft, wenn der Signalhub den vorgegebenen Wert übersteigt. Den zwischen der Busleitung und den Übertragern angeordneten Teilen der Stationen ist entsprechend der geforderten galvanischen Trennung keine Versorgungsspannung zugeführt.

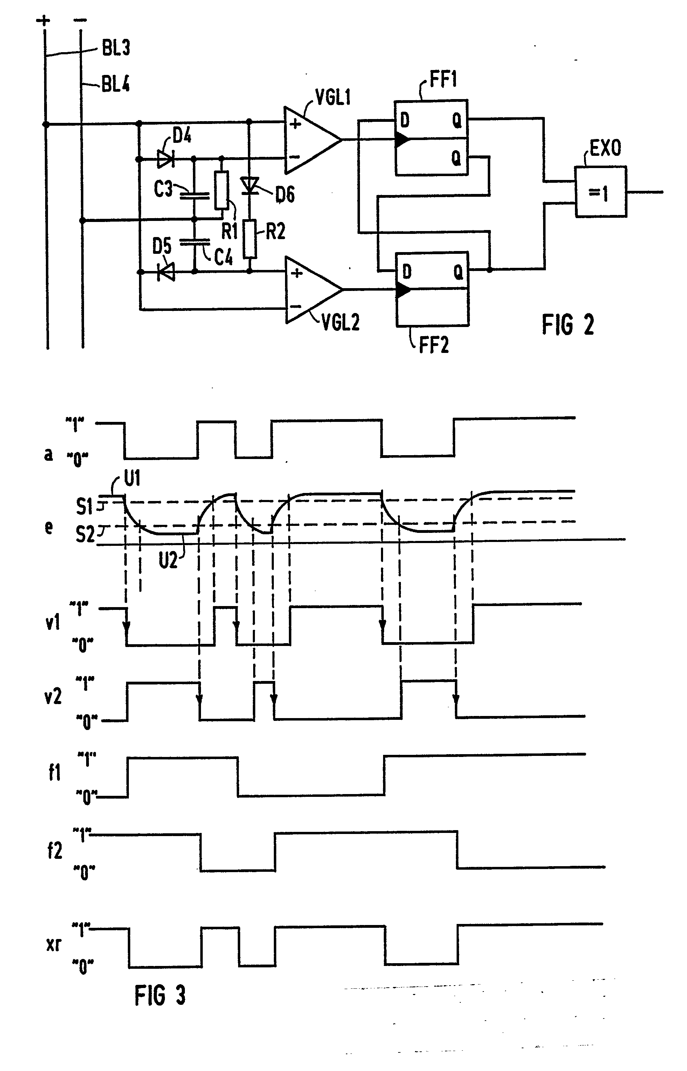

In Figur 2 ist das Schaltbild eines Empfängers mit zwei Schaltschwellen dargestellt, dessen Einsatz dann erforderlich sein kann, wenn die Signale auf der Busleitung, deren Adern mit BL3, BL4 bezeichnet sind, stark verzerrt sind. Die Empfangsschaltung enthält zwei Klemmschaltungen, die aus je einer Reihenschaltung mit einem Kondensator C3 bzw. C4 und einer Diode D4 bzw. D5 bestehen und zwischen den Adern BL3, BL4 der Busleitung liegen. An jede Diode ist ein Vergleicher VGL1, VGL2 angeschlossen. Die Reihenschaltung D4, C3 entspricht der Klemmschaltung D2, C2 der Schaltung nach Figur 1, der Vergleicher dem Transistor T3. Die Anode der Diode D4 sowie die Kathode der Diode D5 sind mit der positive Spannung führenden Ader BL3 verbunden. An derselben Ader liegen der invertierende Eingang des

Vergleichers VGL2 und der nicht invertierende Eingang des Vergleichers VGL1. Parallel zum Kondensator C3 ist ein hochohmiger Widerstand R1 geschaltet. Das Potential am nicht invertierende Eingang des Vergleichers VGL2 wird über einen hochohmigen Widerstand R2, zu dem im Ausführungsbeispiel eine Diode D6 in Reihe geschaltet ist, mit einer im Vergleich zur Pulsdauer großen Zeitkonstante gegen das Potential auf der Busleitung BL3 gezogen, damit Signale mit unterschiedlichem Spannungshub detektiert werden können. An die Ausgänge der Vergleicher VGL1, VGL2 sind die Takteingänge von bistabilen Kippstufen FF1, FF2 angeschlossen, und zwar derart, daß die Kippstufen bei negativen Flanken das ihren Vorbereitungseingängen D zugeführte Signal übernehmen. Der Vorbereitungseingang D der Kippstufe FF1 ist an den Ausgang Q der Kippstufe FF2, der Vorbereitungseingang D der Kippstufe $\overline{FF2}$ an den Ausgang Q der Kippstufe FF1 angeschlossen. Die Ausgänge Q beider Kippstufen sind auf ein Exklusiv-ODER-Glied EXO geführt, an dessen Ausgang das regenerierte Eingangssignal erscheint.

In Figur 3 veranschaulicht das Zeitdiagramm a das Ausgangssignal eines Senders, das Diagramm b das Eingangssignal des betrachteten Empfängers, die Signale v1, v2 die Ausgangssignale von dessen Vergleichern VGL1 bzw. VGL2, die Diagramme f1, f2 die an den Ausgängen Q der Kippstufen FF1, FF2 auftretenden Signale und das Diagramm xr das Ausgangssignal des ExklusivODER-Gliedes EXO.

Im Ausgangszustand, in dem der Sender das Signal "1" abgibt, liegt zwischen den Adern BL3, BL4 der Busleitung die positive Spannung $U_1$. Über die Klemmdiode D4 und den Widerstand R1 fließt ein kleiner Strom, so daß an der Klemmdiode eine Spannung von etwa 0,7 V abfällt. Der Kondensator C3 ist daher auf die um die Durchlaßspannung der Diode D4 verminderte Spannung $U_1$ aufgeladen. Am Eingang dem Vergleichers VGL1 liegt die Durchlaßspannung der Diode D4, sein Ausgangssignal ist daher H, entsprechend log. "1". Unter der Annahme, daß das Eingangssignal e längere Zeit die Spannung $U_1$ hatte, ist der Kondensator C4 über die Diode D6 und den Widerstand R2 auf etwa denselben Wert aufgeladen wie der Kondensator C3, so daß am Eingang des Vergleichers VGL2 etwa dieselbe Spannung liegt wie am Eingang des Vergleichers VGL1, jedoch mit unterschiedlicher Polung. Sein Ausgangssignal v2 ist daher log. "0". Gibt der räumlich vom beschriebenen Empfänger entfernte Sender Nullsignal auf die Busleitung, so sinkt die Eingangsspannung wegen der Kapazität der Busleitung und der daran angeschlossenen Baugruppen im Vergleich zum Ausgangssignal des Senders langsam ab. Nach Absinken des Eingangssignals um die Durchlaßspannungen der Dioden D4, D6 wechselt die Polarität der Eingangsspannungen der Vergleicher VGL1, VGL2 und deren Ausgangssignale v1, v2 werden log. "0" bzw. log. "1". Die negative Flanke des Signals v1 schaltet die Kippstufe FF1 um, das Signal f1 wird daher log. "1", das Ausgangssignal xr des Exklusiv-ODER-Gliedes EXO wird "0". Die positive Flanke des Signals v2 hat keine Wirkung. Bei weiterem Absinken des Eingangssignals e um die Durchlaßspannung der Diode D5 wird über diese der Kondensator C4 umgeladen. Im eingeschwungenen Zustand hat das Signal e die Spannung $U_2$, der Kondensator C4 ist auf die Schwellspannung S2 umgeladen. Gibt der Sender "1"-Signal auf die Busleitung und steigt darauf das Eingangssignal an, so tritt eine negative Flanke im Ausgangssignal v2 auf, welche die Kippstufe FF2 umschaltet. Das Ausgangssignal xr wird daher wie das Ausgangssignal a des Senders log. "1". Erreicht das Eingangssignal e die Schwellspannung 51, schaltet auch der Vergleicher VGL1 um. Die positive Flanke seines Ausgangssignals v11 hat jedoch keine Wirkung, so daß sich das Signal xr nicht ändert. Erst bei der folgenden negativen Flanke des Eingangssignals, wenn der Schwellwert S1 wieder unterschritten wird, wird mit der negativen Flanke des Signals v1 die Kippstufe FF1 umgeschaltet, und das Signal xr folgt dem vom Sender auf die Busleitung geschalteten Signal a.

Im Diagramm e ist die Schwelle S2 der Übersichtlichkeit halber als konstant eingetragen. Tatsächlich steigt dieser Schwellwert während der Zeiten, in denen die Spannung des Eingangssignals größer als $U_2$ ist, wegen der Aufladung des Kondensators C4 über die Diode D6 und den Widerstand R2 langsam an. Andererseits wird der Kondensator C4 während der Phasen niedriger Eingangsspannung über die Diode D5 umgeladen. Dies bedeutet, daß sich die Schaltung stets an den unteren Wert $U_2$ der Eingangsspannung anpaßt. Es werden daher die Eingangssignale unabhängig davon, an welcher Stelle der Busleitung sich der jeweilige Sender befindet, sicher detektiert und wiederhergestellt.

Im Rahmen der Erfindung kann das Ausführungsbeispiel mannigfach abgeändert werden. So kann z. B. auf die Diode D6 verzichtet werden und der hochohmige Widerstand R2 unmittelbar an die Kathode der Diode D4 angeschlossen werden. Ferner können die Vergleicher umgepolt werden, es können Kippstufen verwendet werden, die nicht bei den negativen Flanken, sondern bei den positiven umschalten, und es können die Vorbereitungseingänge der Kippstufen mit den Ausgängen der jeweils anderen Stufe in anderer Weise verbunden werden. Diese Maßnahmen müssen selbstverständlich in geeigneter Kombination getroffen werden. Wesentlich ist, daß zwei Klemmschaltungen für die beiden Eingangssignalpegel vorhanden sind und daß der augenblickliche Eingangssignalpegel mit den Klemmpotentialen verglichen und die Vergleichsergebnisse logisch verknüpft werden, so daß das Eingangssignal wiederhergestellt wird.


**Ansprüche**

1. Schaltungsanordnung zum Übertragen von binären Signalen über eine Busleitung, die über einen Widerstand (RZ1) an eine Spannungsquelle (SQ) angeschlossen und mit dem Wellenwiderstand (RZ2) abgeschlossen ist, mit Sendern (S1, ... Sn) die jeweils einen elektronischen Schalter (T1) enthalten, der zwischen den Adern (BL1, BL2) der Busleitung liegt und der zum Senden des einen Zustandes (L) der binären Signale geschlossen ist, und mit Empfängern (E1, ... En), **dadurch gekennzeichnet,** daß die Empfänger (E1, ... En) jeweils eine Klemmschaltung, die einen Kondensator (C2) auf etwa die Spannung auflädt, die bei einem ersten (H) der beiden Zustände des binären Signals an der Anschlußstelle des jeweiligen Empfängers liegt, und einen Vergleicher (T3) enthalten, der, wenn die Spannung des Kondensators (C2) und die Spannung auf der Busleitung um mehr als einen vorgegebenen Betrag voneinander abweichen, ein den zweiten Zustand (L) des binären Signals anzeigendes Signal, ansonsten ein den ersten Zustand (H) anzeigendes Signal abgibt.

2. Schaltungsanordnung nach Anspruch 1, **dadurch gekennzeichnet,** daß zwischen die Adern (BL1, BL2) der Busleitung eine Reihenschaltung aus dem Kondensator (C2) und einer Diode (D2) liegt, die so gepolt ist, daß sie beim ersten binären Signalzustand (H) leitend und beim zweiten binären Signalzustand gesperrt ist, und daß an die Diode (D2) der Vergleicher angeschlossen ist.

3. Schaltungsanordnung nach Anspruch 2, **dadurch gekennzeichnet,** daß der Vergleicher ein Transistor (T3) ist, dessen Steuerstrecke mit solcher Polung an die Diode (D2) angeschlossen ist, daß er bei leitender Diode gesperrt ist und bei einer Sperrspannung der Diode, die einen vorgegebenen Betrag übersteigt, in den leitenden Zustand gesteuert ist.

4. Schaltungsanordnung nach Anspruch 1, **dadurch gekennzeichnet,** daß die Empfänger jeweils zwei Klemmschaltungen mit je einem Kondensator enthalten, von denen der eine auf etwa die Spannung aufgeladen wird, die beim ersten (H) der beiden Zustände des binären Signals an der Anschlußstelle des jeweiligen Empfängers liegt, und der andere etwa auf die Spannung aufgeladen wird, die beim zweiten (L) der beiden Zustände des binären Signals an der Anschlußstelle des jeweiligen Empfängers liegt, daß ein erster Vergleicher ein den Übergang vom ersten in den zweiten Signalzustand anzeigendes Signal abgibt, wenn die Eingangsspannung die Spannung am ersten Kondensator um mehr als einen vorgegebenen Betrag unterschreitet, und daß ein zweiter Vergleicher ein den Übergang vom zweiten in den ersten Signalzustand anzeigendes Signal abgibt, wenn die Eingangsspannung die Spannung am zweiten Kondensator (C4) um mehr als einen vorgegebenen Betrag überschreitet, und daß an die Vergleicher eine Logikschaltung (FF1, FF2, EXO) angeschlossen ist, die ein dem binären Signal auf der Busleitung entsprechendes wiederhergestelltes Signal abgibt.

5. Schaltungsanordnung nach Anspruch 4, **dadurch gekennzeichnet,** daß zwischen die Adern (BL3, BL4) der Busleitung zwei Reihenschaltungen aus je einem Kondensator (C3, C4) und einer Diode (D4, D5) liegen, wobei die Anode der Diode (D4) der ersten Reihenschaltung mit der positiven Spannung führenden Ader (BL3) der Busleitung und die Kathode der Diode (D5) der zweiten Reihenschaltung mit der negative Spannung führenden Ader (BL4) verbunden ist und daß an die beiden Dioden (D4, D5) die beiden Vergleicher (VGL1, VGL2) angeschlossen sind.

6. Schaltungsanordnung nach Anspruch 4 oder 5, **dadurch gekennzeichnet,** daß der Kondensator (C4), der je nach Ort des jeweiligen Senders auf eine unterschiedliche, dem zweiten Signalzustand entsprechende Spannung aufgeladen wird, über einen hochohmigen Widerstand (R2) auf die dem ersten Signalzustand entsprechende Spannung ($U_1$) aufladbar ist.

7. Schaltungsanordnung nach Anspruch 6, **dadurch gekennzeichnet,** daß zum hochohmigen Widerstand (R2) eine Diode (D6) in Reihe geschaltet ist, die bei der dem ersten Signalzustand entsprechenden Spannung leitend ist.

8. Schaltungsanordnung nach einem der Ansprüchen 4 bis 7, **dadurch gekennzeichnet,** daß an die Vergleicher (VGL1, VGL2) die dynamischen Eingänge von zwei bistabilen Kippstufen (FF1, FF2) angeschlossen sind, deren Vorbereitungseingänge mit dem Ausgang der jeweils anderen bistabilen Kippstufe derart verbunden sind, daß sie von den Ausgangsimpulsen der Vergleicher (VGL1, VGL2) wechselweise umgeschaltet werden und an deren Ausgänge ein Exklusiv-ODER-Glied (EXO) angeschlossen ist, welches das den Signalen auf der Busleitung entsprechende binäre Signal abgibt.

9. Schaltungsanordnung nach einem der Ansprüche 1 bis 8, **dadurch gekennzeichnet,** daß die den Signalen auf der Busleitung entsprechenden wiederhergestellten Signale einer Wicklung (W4) eines Übertragers (U2) zugeführt sind, der eine zweite Wicklung aufweist, der ein Wechselstromsignal mit einer im Vergleich zur Dauer der binären Signale kurzen Periodendauer zugeführt ist, und daß an die zweite Wicklung oder einer weiteren Wicklung (W5) ein Gleichrichter (D3) angeschlossen ist, der ein dem über die Busleitung übertragenden binären Signal entsprechendes Signal abgibt.

88 P 4429 E

FIG 1

88 P 4429 E

FIG 2

FIG 3